# EUROPEAN PATENT SPECIFICATION

(11) **EP 3 012 589 B1**
(45) Date of publication and mention of the grant of the patent: **17.07.2019**
(21) Application number: 15002183.0
(22) Date of filing: 23.07.2015
(51) Int. Cl.: G01C 21/36, G06Q 50/00

(54) **MOBILE TERMINAL AND METHOD OF CONTROLLING THE SAME**
MOBILES ENDGERÄT UND VERFAHREN ZUR STEUERUNG DAVON
TERMINAL MOBILE ET SON PROCÉDÉ DE COMMANDE

(30) Priority: 23.10.2014 KR 20140144362
(43) Date of publication of application: 27.04.2016
(73) Proprietor: LG Electronics Inc., Yeongdeungpo-gu Seoul 150-721 (KR)
(72) Inventor: Kim, Mingoo, 137-893 Seoul (KR); Jung, Wonmook, 137-893 Seoul (KR); Jo, Junghee, 137-893 Seoul (KR)
(74) Representative: Beyer, Andreas

(56) References cited:
- EP-A1- 2 469 232
- EP-A2- 1 160 694
- US-A1- 2011 131 243
- US-A1- 2012 208 559
- US-A1- 2014 012 497
- US-A1- 2014 280 355

## Description

### BACKGROUND OF THE INVENTION

### 1. Field of the Invention

The present invention relates to a mobile terminal and a method of controlling the same.

### 2. Background of the Invention

A terminal is broadly categorized by mobility into a mobile terminal and a stationary terminal. The mobile terminal is further categorized by portability into a handheld terminal and a vehicle-mounted terminal.

In response to an increasing demand for diversified functions, the terminal has been realized in the form of a multimedia player with multiple functions such as shooting a photographic object as a still image or moving images, reproducing digital audio and video compression files, playing a game, receiving a broadcast or the like.

US 2014/0280355 A1 discloses a system, comprising: a central database storing personalized content of a user; a portal for accessing and manipulating the personalized content on the central database; and a vehicle navigation system configured to receive the personalized content from the central database and to display the personalized content on a map. The personalized content can include: pictures, points of interest, routes/paths, locations of people, and any real time information that can be displayed on the navigation map. Furthermore, the personalized content can be any visual or interactive elements on the map and may be dynamic and state specific. Using the portal, the user can create personalized content on the portal website directly. Additionally, using location-based browser services, the user can have geo-referenced, personalized information displayed through the navigation system. The portal is configured to maintain the personal content in the form of distinct sets (i.e., layers) of content in one or more user accounts on the portal. For example, geo-tagged pictures, content from social networks, new applications, etc. may be added through the portal or by synchronizing with user accounts such as social network accounts.

US 2012/0208559 A1 discloses a personal navigation device, comprising: a communication interface device operable to provide an interface for communications with a server; and a controller operably associated with the communication interface device. The controller is configured to: transmit a destination request to the server from the personal navigation device over a wireless network link established via the communication interface device; and to receive a response to the destination request over the wireless network link wherein the response comprises location data for each of one or more destinations. The server manages a user account associated with a user. The controller is further configured to request a search of the user account by the server to identify destinations from the user account. The search is of information records that are personal to the user, such as: calendar records associated with the user, contact records associated with the user, emails associated with the user, and web browser history associated with the user.

US 2014/012497 A1, EP 2469232 A1 and EP 1160694 A2 disclose further navigation systems which access navigation-relevant information from a remote server.

### SUMMARY OF THE INVENTION

Therefore, an aspect of the detailed description is to provide a mobile terminal capable of checking and managing places which a user has ever visited easily and conveniently, by generating navigation history information based on place-based data detected from a server corresponding to a user account, and a method of controlling the same.

To achieve these and other advantages and in accordance with the purpose of this specification, as embodied and broadly described herein, there is provided a mobile terminal according to claim 1.

In an embodiment of the present invention, the server may be a social networking service (SNS) server or a web server.

In an embodiment of the present invention, the controller may record the place-based data and position information searched from a navigation application program, to the navigation history information.

In an embodiment of the present invention, the controller may record, to the navigation history information, place data included in vehicle's visit history information stored in the mobile terminal, and the detected place-based data.

In an embodiment of the present invention, the mobile terminal may further include an auxiliary terminal connected to the mobile terminal, and configured to determine whether the controller is able to set the position information included in the navigation history information as a destination.

In an embodiment of the present invention, the controller may set priorities to the plurality of POIs, in order of places having higher recommendation grades, and may display the plurality of POIs on the navigation history information according to the priorities.

In an embodiment of the present invention, the controller may set priorities to the plurality of POIs according to a user's preference, and may display the plurality of POIs on the navigation history information according to the priorities.

In an embodiment of the present invention, the controller may display the plurality of POIs on the navigation history information, in order of registration time of the place-based data to the server.

In an embodiment of the present invention, the controller may detect a POI closest to a current position of the mobile terminal, among the plurality of POIs, and may automatically display the detected POI on the map data.

In an embodiment of the present invention, the controller may detect a POI closest to a currently-set destination among the plurality of POIs, and may recommend the detected POI as a final destination.

To achieve these and other advantages and in accordance with the purpose of this specification, as embodied and broadly described herein, there is also provided a method according to claim 8.

The present invention can have the following advantages.

Since navigation history information is generated based on place-based data detected from a server corresponding to a user account, places which a user has ever visited can be checked and managed easily and conveniently.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a configuration of a mobile communication terminal according to embodiments of the present invention;
FIG. 2 is a block diagram illustrating a vehicle navigation system according to embodiments of the present invention;
FIG. 3 is a block diagram illustrating a configuration of a telematics terminal according to embodiments of the present invention;
FIG. 4 is a block diagram illustrating a configuration of a navigation (vehicle navigation) device according to embodiments of the present invention;
FIG. 5 is an exemplary view of a mobile terminal which is mountable/detachable to/from a vehicle according to embodiments of the present invention;
FIG. 6 is an exemplary view illustrating a general mode of a mobile terminal;
FIG. 7 is an exemplary view illustrating a vehicle mode displayed on a mobile terminal according to embodiments of the present invention;
FIG. 8 is an exemplary view illustrating a plurality of terminals interworking with each other in a vehicle according to embodiments of the present invention;
FIG. 9 is a flowchart illustrating a method of controlling a mobile terminal according to an embodiment of the present invention;
FIG. 10 is a view illustrating a configuration of a mobile terminal to which an auxiliary terminal is connected according to another embodiment of the present invention;
FIG. 11 is an exemplary view illustrating navigation history information according to another embodiment of the present invention;
FIG. 12 is an exemplary view illustrating navigation history information according to another embodiment of the present invention;
FIGS. 13A and 13B are exemplary views illustrating navigation history information according to another embodiment of the present invention; and
FIG. 14 is an exemplary view illustrating navigation history information according to another embodiment of the present invention.

### DETAILED DESCRIPTION OF THE INVENTION

The terminology used herein is for the purpose of describing particular embodiments only and is not intended to be limiting of the invention. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, it should be replaced with technical terms that allow the person in the art to properly understand. The general terms used herein should be interpreted according to the definitions in the dictionary or in the context and should not be interpreted as an excessively contracted meaning.

As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention.

The exemplary embodiments of the present invention will now be described with reference to the accompanying drawings, in which similar numbers refer to similar elements throughout.

Also, in describing the present invention, if a detailed explanation for a related known function or construction is considered to unnecessarily divert the gist of the present invention, such explanation has been omitted but would be understood by those skilled in the art. The accompanying drawings of the present invention aim to facilitate understanding of the present invention and should not be construed as limited to the accompanying drawings.

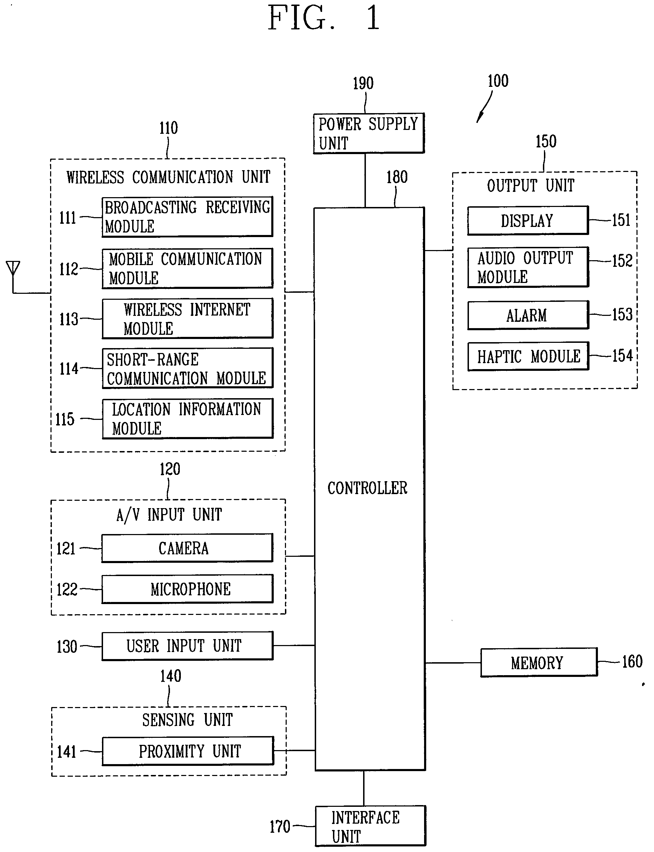

FIG. 1 is a view illustrating a configuration of a mobile communication terminal 100 according to embodiments of the present invention. The mobile communication terminal (i.e., a cellular phone or a mobile phone) 100 may be implemented in various forms such as mobile phones, smart phones, notebook computers, digital broadcast terminals, PDAs (Personal Digital Assistants), PMPs (Portable Multimedia Player), etc.

As illustrated in FIG. 1, the mobile communication terminal 100 includes a wireless communication unit 110, an A/V (Audio/Video) input unit 120, a user input unit 130, a sensing unit 140, an output unit 150, a memory 160, an interface unit 170, a controller 180, and a power supply unit 190, etc. FIG. 1 shows the mobile communication terminal 100 having various components, but it is understood that implementing all of the illustrated components is not a requirement. The mobile communication terminal 100 may be implemented by greater or fewer components.

The wireless communication unit 110 typically includes one or more components allowing radio communication between the mobile communication terminal 100 and a wireless communication system or a network in which the mobile communication terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this case, the broadcast associated information may be received by the mobile communication module 112. The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO®), integrated services digital broadcast-terrestrial (ISDB-T), etc. The broadcast receiving module 111 may be configured to be suitable for every broadcast system that provides a broadcast signal as well as the above-mentioned digital broadcast systems. Broadcast signals and/or broadcast-associated information received via the broadcast receiving module 111 may be stored in the memory 160 (or anther type of storage medium).

The mobile communication module 112 transmits and/or receives radio signals to and/or from at least one of a base station (e.g., access point, Node B, etc.), an external terminal (e.g., other user devices) and a server (or other network entities). Such radio signals may include a voice call signal, a video call signal or various types of data according to text and/or multimedia message transmission and/or reception.

The wireless Internet module 113 supports wireless Internet access for the mobile communication terminal. This module may be internally or externally coupled to the terminal. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The location information module 115 is a module for checking or acquiring a location (or position) of the mobile communication terminal (when the mobile communication terminal is located in a vehicle, the location of the vehicle can be checked). For example, the location information module 115 may be embodied by using a GPS (Global Positioning System) module that receives location information from a plurality of satellites. Here, the location information may include coordinate information represented by latitude and longitude values. For example, the GPS module may measure an accurate time and distance from three or more satellites, and accurately calculate a current location of the mobile communication terminal according to trigonometry on the basis of the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites. As the location information module 115, a Wi-Fi position system and/or a hybrid positioning system may be used.

The A/V input unit 120 is configured to receive an audio or video signal. The A/V input unit 120 may include a camera 121 (or other image capture device) and a microphone 122 (or other sound pick-up device). The camera 121 processes image data of still pictures or video obtained by an image capturing device in a video capturing mode or an image capturing mode. The processed image frames may be displayed on a display unit 151 (or other visual output device).

The image frames processed by the camera 121 may be stored in the memory 160 (or other storage medium) or transmitted via the wireless communication unit 110. Two or more cameras 121 may be provided according to the configuration of the mobile communication terminal.

The microphone 122 may receive sounds (audible data) via a microphone (or the like) in a phone call mode, a recording mode, a voice recognition mode, and the like, and can process such sounds into audio data. The processed audio (voice) data may be converted for output into a format transmittable to a mobile communication base station (or other network entity) via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 (or other user input device) may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like. In particular, when the touch pad is overlaid on the display unit 151 in a layered manner, it may form a touch screen.

The sensing unit 140 (or other detection means) detects a current status (or state) of the mobile communication terminal 100 such as an opened or closed state of the mobile communication terminal 100, a location of the mobile communication terminal 100, the presence or absence of user contact with the mobile communication terminal 100 (i.e., touch inputs), the orientation of the mobile communication terminal 100, an acceleration or deceleration movement and direction of the mobile communication terminal 100, etc., and generates commands or signals for controlling the operation of the mobile communication terminal 100. For example, when the mobile communication terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The interface unit 170 (or other connection means) serves as an interface by which at least one external device may be connected with the mobile communication terminal 100. For example, the external devices may include wired or wireless headset ports, an external power supply (or battery charger) ports, wired or wireless data ports, memory card ports, ports for connecting a device having an identification module, audio input/output (I/O) ports, video I/O ports, earphone ports, or the like. Here, the identification module may be a memory chip (or other element with memory or storage capabilities) that stores various information for authenticating user's authority for using the mobile communication terminal 100 and may include a user identity module (UIM), a subscriber identity module (SIM) a universal subscriber identity module (USIM), and the like. In addition, the device having the identification module (referred to as the 'identifying device', hereinafter) may take the form of a smart card. Accordingly, the identifying device may be connected with the terminal 100 via a port or other connection means. The interface unit 170 may be used to receive inputs (e.g., data, information, power, etc.) from an external device and transfer the received inputs to one or more elements within the mobile communication terminal 100 or may be used to transfer data within the mobile communication terminal to an external device.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like. The mobile terminal 100 may include two or more display units (or other display means) according to its particular desired embodiment. For example, the mobile terminal may include both an external display unit (not shown) and an internal display unit (not shown).

When the display unit 151 and the touch pad are overlaid in a layered manner to form a touch screen, the display unit 151 may function as both an input device and an output device. The touch sensor may have the form of, for example, a touch film, a touch sheet, a touch pad, and the like.

The touch sensor may be configured to convert the pressure applied to a particular portion of the display unit 151 or a change in capacitance generated at a particular portion of the display unit 151 into an electrical input signal. The touch sensor may be configured to detect a touch input pressure as well as a touch input position and a touch input area. When there is a touch input with respect to the touch sensor, the corresponding signal(s) are sent to a touch controller (not shown). The touch controller processes the signal(s) and transmits corresponding data to the controller 180. Accordingly, the controller 180 can recognize a touched region of the display unit 151.

A proximity sensor 141 may be may be disposed within the mobile terminal covered by the touch screen or near the touch screen. The proximity sensor 141 refers to a sensor for detecting the presence or absence of an object that accesses a certain detect surface or an object that exists nearby by using the force of electromagnetism or infrared rays without a mechanical contact. Thus, the proximity sensor 141 has a longer life span compared with a contact type sensor, and it can be utilized for various purposes.

The example of the proximity sensor 141 may be a transmission type photo sensor, a direct reflection type photo sensor, a mirror-reflection type photo sensor, an RF oscillation type proximity sensor, a capacitance type proximity sensor, a magnetic proximity sensor, an infrared proximity sensor. When the touch screen is an electrostatic type touch screen, an approach of the pointer is detected on the basis of a change in an electric field according to the approach of the pointer. In this case, the touch screen (touch sensor) may be classified as a proximity sensor.

In the following description, for the sake of brevity, recognition of the pointer positioned to be close to the touch screen without being contacted will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

The proximity sensor 141 detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 153 outputs a signal for informing about an occurrence of an event of the mobile terminal 100. Events generated in the mobile terminal may include call signal reception, message reception, key signal inputs, and the like. In addition to video or audio signals, the alarm unit 153 may output signals in a different manner, for example, to inform about an occurrence of an event. For example, the alarm unit 153 may output a signal in the form of vibration. When a call signal is received or a message is received, the alarm unit 153 may vibrate the mobile terminal through a vibration means. Or, when a key signal is inputted, the alarm unit 153 may vibrate the mobile terminal 100 through a vibration means as a feedback with respect to the key signal input. Through the vibration, the user may recognize the occurrence of an event. A signal for notifying about the occurrence of an event may be output to the display unit 151 or to the voice output module 152.

A haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100. The haptic module 154 may be provided to a place which is frequently in contact with the user. For example, the haptic module 154 may be provided to a steering wheel, a gearshift, a lever, a seat, and the like.

The memory 160 may store software programs used for the processing and controlling operations performed by the controller 180, or may temporarily store data (e.g., a map data, phonebook, messages, still images, video, etc.) that are inputted or outputted.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like. Here, the identification module may be a chip that stores various types of information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port. The interface unit 170 may be used to receive inputs (e.g., data, information, power, etc.) from an external device and transfer the received inputs to one or more elements within the mobile terminal 100 or may be used to transfer data between the mobile terminal and an external device.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof. For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself. For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

The voice recognition module (voice recognition engine) recognizes a voice pronounced by the user and performs a corresponding function according to the recognized voice signal.

A navigation session applied to the mobile terminal 100 displays a route from a point of departure to a destination on map data.

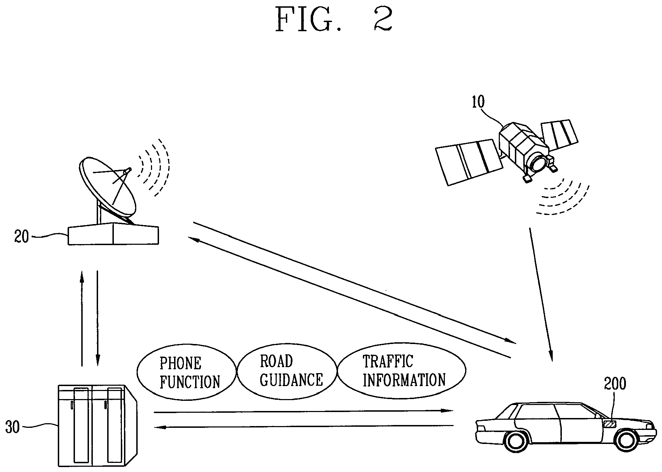

FIG. 2 is a view illustrating a vehicle navigation system according to exemplary embodiments of the present disclosure.

As illustrated in FIG. 2, a vehicle navigation system includes an information providing center (server) 30 providing traffic information and various types of data (e.g. a program, an execution file, and the like); and a telematics terminal 200 mounted within a vehicle, receiving traffic information through a wide area wireless communication network 20 and/or a local area wireless communication network, and providing a road guidance service on the basis of an artificial satellite 10. Here, the communication network may further include a wired/wireless communication network such as a local area network (LAN) or a wide area network (WAN).

Through the communication network, various types of traffic information (e.g., road traffic information, information regarding a point of interest (POI)) including information regarding a traffic light, are collected, and the collected information is processed by an information providing center 30 (e.g., a server) according to a TPEG (Transport Protocol Expert Group) standard and transmitted to a broadcast station. Then, the broadcast station inserts the traffic information including the information regarding a traffic light into a broadcast signal and broadcasts the same to the telematices terminal 200 of the vehicle. The information providing center 30 (for example, a server) may transmit the traffic information to the telematics terminal 200 of the vehicle through the communication network.

The server reconfigures various types of traffic information, which are collected through various paths connected to the communication network, for example, according to an operator input, through the wired/wireless Internet, from digital broadcast services such as a TDC (Transparent Data Channel) or a MOC (Multimedia Object Transport), from a different server, or from a probe car, into a traffic information format such as a format in conformity with a TPEG (Transport Protocol Expert Group) standard, namely, for example, a standard for a traffic information service, and transmits the same to the broadcast station or the telematics terminal 200.

The server may generate a traffic information format on the basis of the TPEG standard including traffic light information, and transmit the same to the broadcast station. The traffic information may include traffic light information and may also include information regarding various traffic conditions required for vehicle driving in roads, sea traffic, airline flights, such as accidents, a road situation, traffic congestion, road construction, road blockage (or road closure), a public transportation network delay, air transportation holdup, and the like.

The broadcast station receives the processed traffic information including traffic light information from the server and transmits it through digital signals in conformity with various digital broadcast standards to the vehicle 200. In this case, the broadcast standards include a European digital audio broadcasting (DAB) standard on the basis of Eureca-147 [ETSI EN 300 401), a terrestrial or satellite digital multimedia broadcasting (DMB) standard, a terrestrial digital video broadcasting (DVB-T) standard, a mobile digital video broadcasting-handheld (DVB-H) standard, media forward link only (MFLO) standard, and the like.

Also, the broadcast station may transmit the traffic information including the traffic light information through a wired/wireless network such as the wired/wireless Internet.

The telematics terminal 200 receives traffic light information included in the traffic information and transfers the traffic light information to the user through graphics, text, and/or audio.

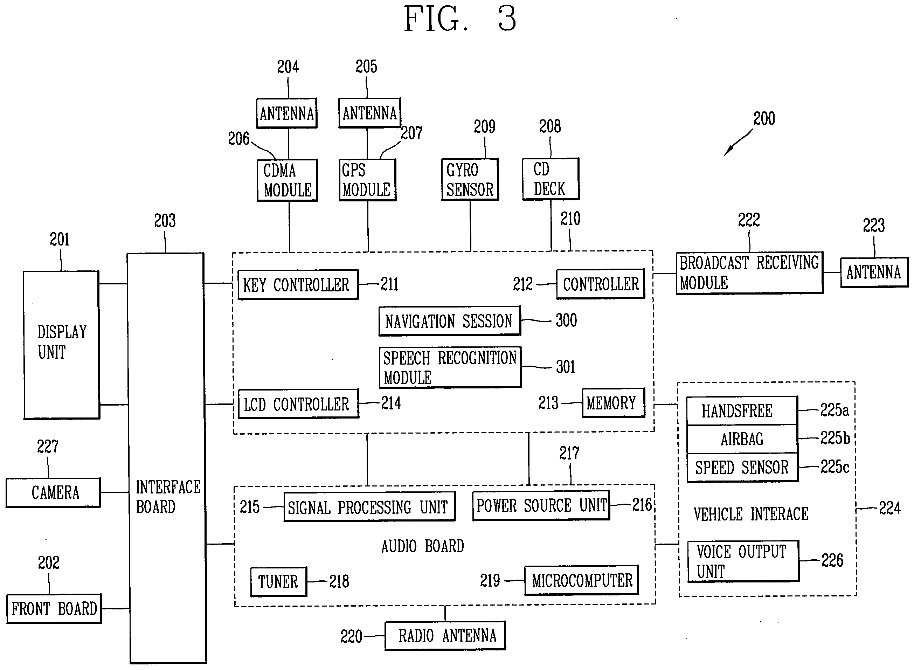

Hereinafter, the configuration of the telematics terminal 200 installed in a vehicle according to an exemplary embodiment of the present disclosure will be described with reference to FIG. 3.

FIG. 3 is a schematic block diagram illustrating a configuration of a telematics terminal 200 according to exemplary embodiments of the present disclosure.

As illustrated in FIG. 3, the telematics terminal (or a head unit) 200 includes a main board 210 including a controller (e.g., a central processing unit (CPU)) for controlling the telematics terminal 200 on the whole, a memory 213 for storing various types of information, a key controller 211 for controlling various key signals, and a liquid crystal display (LCD) controller 214 for controlling an LCD.

The memory 213 stores map information (map data) for displaying road guidance information on a digital map. Also, the memory 213 stores a traffic information collecting control algorithm for inputting traffic information according to the situation of a road in which the vehicle currently travels (runs), and information for controlling the algorithm.

The telematics terminal (or head unit) 200 includes a communication unit 206 including a short-range communication unit (for example, Bluetooth™) and a remote communication unit (for example, a code division multiple access (CDMA) communication unit), a global position system (GPS) module 207 for guiding a location of the vehicle, receiving a GPS signal for tracking a travel route from a start point to a destination, or transmitting traffic information collected by the user, as a GPS signal, a CD deck 208 for reproducing a signal recorded in a CD (Compact Disk), a gyro sensor 209, and the like.

The communication unit 206 and the GPS module 207 may transmit and receive signals through antennas 204 and 205.

A broadcast receiving module 222 is connected with the main board 210 and receives a broadcast signal via an antenna 223. A display unit (i.e., an LCD) 201 under the control of the LCD controller 214, a front board 202 under the control of the key controller 211, and a camera 227 for capturing the interior and/or the exterior of a vehicle are connected to the main board 210 via an interface board 203. The display unit 201 displays various video signals and character signals, and the front board 202 includes buttons for various key signal inputs and provides a key signal corresponding to a button selected by the user to the main board 210. Also, the display unit 201 includes a proximity sensor and a touch sensor (touch screen) of FIG. 2.

The front board 202 includes a menu key for directly inputting traffic information. The menu key may be configured to be controlled by the key controller 211.

An audio board 217 is connected with the main board 210 and processes various audio signals. The audio board 217 includes a microcomputer 219 for controlling the audio board 217, a tuner 218 for receiving a radio signal, a power source unit 216 for supplying power to the microcomputer 219, and a signal processing unit 215 for processing various voice signals.

The audio board 217 also includes a radio antenna 220 for receiving a radio signal and a tape deck for reproducing an audio tape. The audio board 217 may further include a voice output unit (e.g., an amplifier) 226 for outputting a voice signal processed by the audio board 217.

The voice output unit (amplifier) 226 is connected to a vehicle interface 224. Namely, the audio board 217 and the main board 210 are connected to the vehicle interface 224. A handsfree 225a for inputting a voice signal, an airbag 225b configured for the security of a passenger, a speed sensor 225c for detecting a speed of the vehicle, and the like, may be connected to the vehicle interface 224. The speed sensor 225c calculates a vehicle speed and provides the calculated vehicle speed information to the CPU.

The navigation session 300 applied to the telematics terminal 200 generates road guidance information on the basis of the map data and current location information of the vehicle and provides the generated road guidance information to a user.

The display unit 201 detects a proximity touch within a display window via a proximity sensor. For example, when a pointer (e.g., user's finger or a stylus) is proximity-touched, the display unit 201 detects the position of the proximity touch and outputs position information corresponding to the detected position to the controller 212.

A voice recognition module (or a voice recognition engine) 301 recognizes a voice pronounced by the user and performs a corresponding function according to the recognized voice signal.

The navigation session 300 applied to the telematics terminal 200 displays a travel route on map data, and when the location of the mobile terminal 100 is within a preset distance from a blind spot included in the travel route, the navigation session 300 automatically forms a wireless network with a terminal mounted in an adjacent vehicle (e.g., a vehicle navigation device) and/or a mobile communication terminal carried by a nearby pedestrian through wireless communication (e.g., a short-range wireless communication network), to receive location information of the adjacent vehicle from the terminal mounted in the adjacent vehicle and receive location information of the nearby pedestrian from the mobile communication terminal carried by the nearby pedestrian.

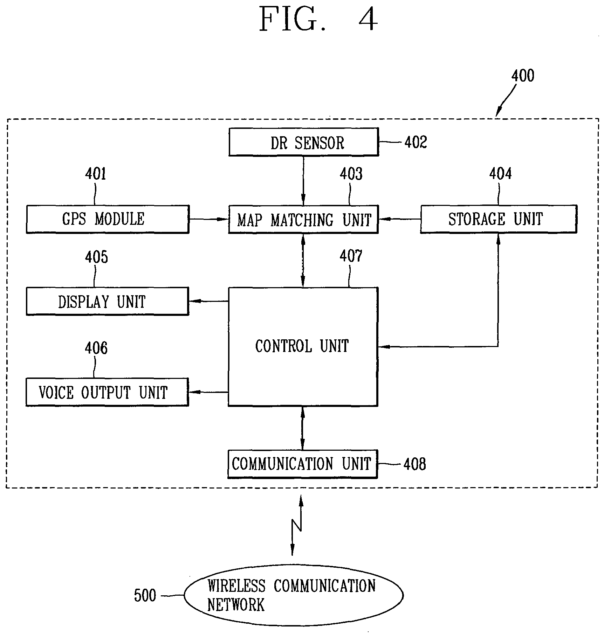

FIG. 4 is a block diagram illustrating a configuration of a navigation (vehicle navigation) device 400 according to embodiments of the present invention.

The navigation (vehicle navigation) device 400 is categorized into an in-dash type and an on-dash type according to an installation type in the vehicle 200. The in-dash type navigation (vehicle navigation) device is insertion-fixed to a predetermined space allocated to a dash board of the vehicle 200. The on-dash type navigation (vehicle navigation) device is mounted on a dash board of the vehicle 200, or is installed near the dash board by using a predetermined supporting plate. Since the on-dash type navigation (vehicle navigation) device is detachably mounted, it may be separated from the vehicle 200 for portability.

The navigation (vehicle navigation) device 400 according to embodiments of the present invention includes not only the in-dash type and the on-dash type, but also an information processing device which can receive and/or process traffic information, e.g., various types of portable terminals which perform a navigation function by interworking with a GPS receiver for receiving a navigation message from a global positioning system (GPS) satellite in the vehicle 200.

As shown in FIG. 4, the navigation device 400 includes a GPS module 401 configured to receive a global positioning system (GPS) signal from a satellite, and configured to generate first vehicle position of the navigation device 400 (regarded to have the same position as the telematics terminal 200 or the mobile communication terminal 100) based on the received GPS signal; a dead-reckoning (DR) sensor 402 configured to generate second vehicle position data based on a driving direction of a vehicle and a speed of the vehicle; a storage unit (or memory) 404 configured to store therein map data and various information; a map matching unit 403 configured to generate a vehicle estimation position based on the first vehicle position data and the second vehicle position data, to match the generated vehicle estimation position with a link (a map matching link or a map matching road) included in the map data stored in the storage unit 404, and to output the matched map information (map matching result); a communication unit 408 configured to receive real-time traffic information from an information providing center and/or a nearby vehicle, through a wireless communication network 500, to receive traffic light information, and to perform a call; a controller 407 configured to generate road guidance information based on the matched map information (map matching result); a display unit 405 configured to display a road guidance map (including information on points of interest (POI)) and the traffic light information; and a voice output unit 406 configured to output road guidance voice information (road guidance voice message) included in the road guidance information, and a voice signal corresponding to the traffic light information.

The communication unit 408 further includes a hands-free device having a Bluetooth module, and may receive a broadcasting signal including traffic information of a TPEG format from a broadcasting station through an antenna. The broadcasting signal includes video and audio data according to various standards such as terrestrial or satellite digital multimedia broadcasting (DMB), digital audio broadcasting (DAB) and digital video broadcasting (DVB-T, DVB-H), but also additional information such as traffic information for traffic information (TPEG) service and data information for binary format for scene (BIFS) service, and various types of additional data. Also, the communication unit 408 tunes a signal bandwidth to which traffic information is provided, demodulates the tuned signal, and outputs the demodulated signal to a TPEG decoder included in the controller 407.

The TPEG decoder decodes traffic information of a TPEG format, and provides, to the controller 407, various types of information such as traffic light information included in the traffic information.

The road guidance information may include not only map data, but also various types of information related to driving, such as lane information, driving limit speed information, turn-by-turn information, traffic safety information, traffic guidance information, vehicle information, and road search information.

A signal received through the GPS module 401, may provide position information of the mobile terminal to the navigation device 400, through wireless communication technology such as 802.11, 802.15, 802.16 and 802.20. IEEE 802. 11 is a set of specifications for implementing wireless local area network (WLAN) computer communication proposed by the Institute of Electrical and Electronics Engineers (IEEE) LAN/MAN standards committee. IEEE 802.15 is a working group of the Institute of Electrical and Electronics Engineers (IEEE) IEEE 802 standards committee which specifies wireless personal area network (WPAN) standards such as Bluetooth, UWB and Zigbee. IEEE 802.16 is a series of wireless broadband standards written by the Institute of Electrical and Electronics Engineers (IEEE), standards for wireless metropolitan area network broadband wireless access (MAN BWA) such as metropolitan broadband networks (fixed wireless access: FWA). IEEE 802.20 or Mobile Broadband Wireless Access (MBWA) is a specification by the standard association of the Institute of Electrical and Electronics Engineers (IEEE) for mobile wireless Internet access networks such as Wibro and WiMAX.

The navigation device 400 may further include an input unit. The input unit, configured to select a user's desired function or to input information, may be implemented as a keypad, a touch screen, a jog shuttle, a microphone, etc.

The map matching unit 403 is configured to generate a vehicle estimation position based on the first position data and the second position data, and reads map data corresponding to a driving path, from the storage unit 404.

The map matching unit 403 is configured to match the vehicle estimation position with links (roads) included in the map data, and to output the matched map information (map matching result) to the controller 407. For instance, the map matching unit 403 generates a vehicle estimation position based on the first position data and the second position data, and matches the generated vehicle estimation position with links included in the map data stored in the storage unit 404, in order of links. Then, the map matching unit 403 outputs the matched map information (map matching result) to the controller 407. The map matching unit 403 may output, to the controller 407, road attribute information included in the matched map information (map matching result), such as a single-story road or a double-story road. The function of the map matching unit 403 may be executed by the controller 407.

The storage unit 404 is configured to store map data therein. The map data includes geographic coordinates indicating a latitude and a longitude in the unit of degree/minute/second (DMS). The map data may include universal transverse Mercator (UTM) coordinates, universal polar system (UPS) coordinates, transverse Mercator (TM) coordinates, etc., as well as the geographic coordinates.

The storage unit 404 stores therein various types of menu screens, points of interest (POIs), and various types of information such as function characteristic information according to a specific position of map data.

The storage unit 404 stores therein various user interfaces (UIs) and/or graphic user interfaces (GUIs).

The storage unit 404 stores therein data, programs, etc. required to operate the navigation device 400.

The storage unit 404 stores therein destination information input by a user through the input unit. The destination information may indicate either a destination, or a starting point and a destination.

The display unit 405 displays video information (or a road guidance map) included in road guidance information generated by the controller 407. The display unit 405 includes a touch sensor (touch screen) and a proximity sensor. The road guidance information may include not only map data, but also various types of information related to driving, such as lane information, driving limit speed information, turn-by-turn information, traffic safety information, traffic guidance information, vehicle information, and road search information.

When displaying the video information, the display unit 405 may display various menu screens and various content such as road guidance information, by using a user interface and/or a graphic user interface included in the storage unit 404. The content displayed on the display unit 405 includes various texts or image data (including map data or various types of information data), a menu screen including data such as icons, a list menu and a combo box, and so on.

The voice output unit 406 outputs voice information included in road guidance information generated by the controller 407, or a voice message with respect to the road guidance information. The voice output unit 406 may be implemented as an amplifier or a speaker.

The controller 407 generates road guidance information based on the matched map information, and outputs the generated road guidance information to the display unit 405 and the voice output unit 406. The display unit 405 displays the road guidance information.

The controller 407 generates road guidance information by receiving real-time traffic information from the information providing center and/or a terminal mounted to a peripheral vehicle (vehicle navigation device).

The controller 407 may perform a call by being connected to a call center through the communication unit 408, or may transmit/receive information between the navigation device 400 and the call center. The communication unit 408 further includes a hands-free module having a Bluetooth function using a short-range wireless communication method.

Once a POI search menu is selected by a user, the controller 407 searches for POIs positioned on a path from a current position to a destination, and displays the searched POIs on the display unit 405. The controller 407 searches for a POI positioned on the path (i.e., a point searched without change (research) of the path, e.g., a POI positioned on the left or right side of a road) and/or a POI positioned near the path (i.e., a point searched after change of the path, e.g., a point searched after change of a preset path so as to pass through a nearby POI), and displays the searched POI(s) on the display unit 405.

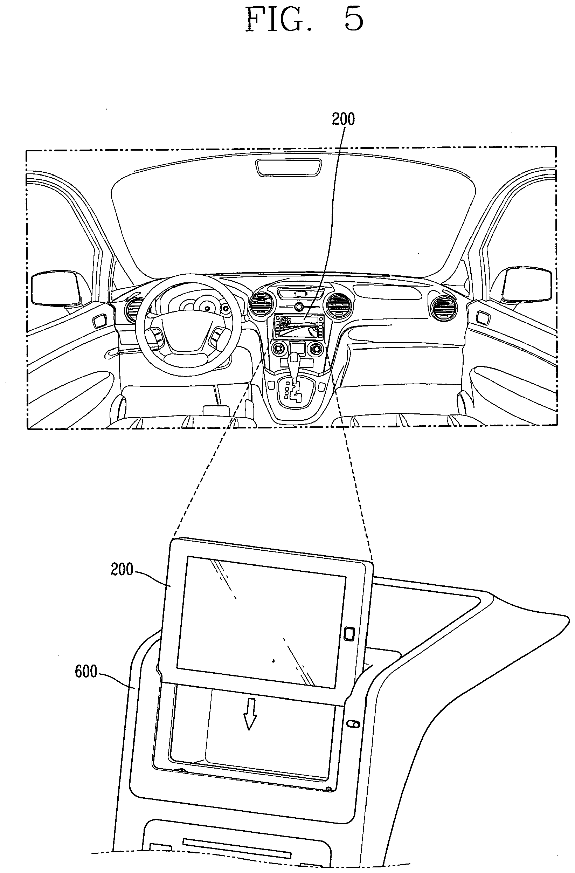

Hereinafter, a mobile terminal which is detachably mountable to a dash board of a vehicle will be explained with reference to FIG. 5.

FIG. 5 is an exemplary view of a mobile terminal which is mountable/detachable to/from a vehicle according to embodiments of the present invention.

As shown in FIG. 5, the mobile terminal may be the mobile communication terminal 100 or the telematics terminal 200. As the telematics terminal 200, a notebook computer, a tablet personal computer (PC), etc. may be used. Hereinafter, the present invention will be explained in an assumption that the telematics terminal 200 (e.g., tablet PC) is the mobile terminal.

The mobile terminal 200 is mountable or detachable to/from a dash board 600 of a vehicle. Once the mobile terminal 200 is mounted to the dash board 600 of the vehicle, a general mode of the mobile terminal 200 is automatically converted into a vehicle mode (vehicle screen mode), and a plurality of content inside the mobile terminal are displayed on the display unit 201 of the mobile terminal 200 under restrictions on vehicle driving. When mounted to the dash board 600 of the vehicle, the mobile terminal 200 is connected to an electronic controller (ECU) of the vehicle.

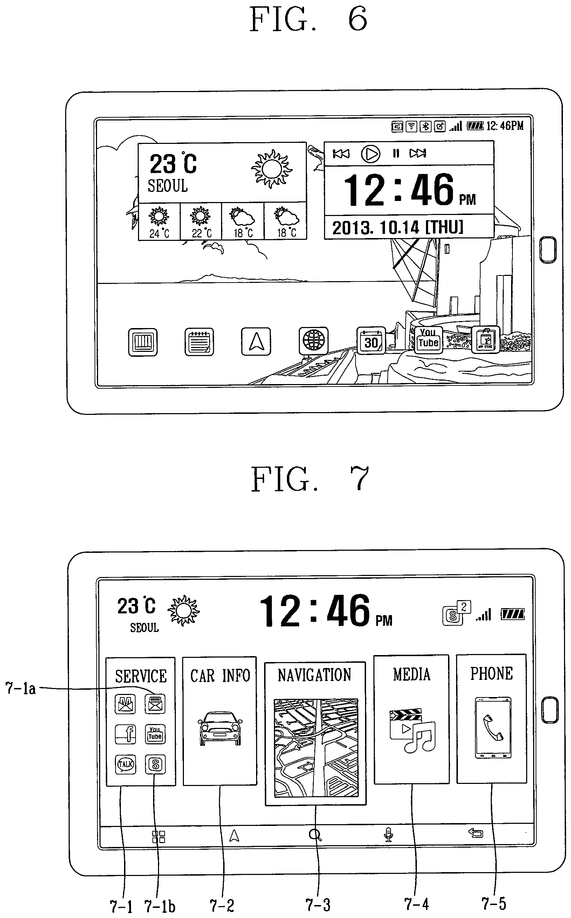

FIG. 6 is an exemplary view illustrating a general mode of a mobile terminal.

As shown in FIG. 6, the mobile terminal 200 displays various content (icons of application programs) on a screen regardless of vehicle restrictions in a general mode, and executes the content according to a user's request. If a navigation application program is executed by a user in a general mode, the mobile terminal 100 displays pedestrian navigation information not vehicle navigation information, on the screen.

In the vehicle mode (vehicle screen mode), the mobile terminal 200 receives vehicle information from the vehicle, synchronizes the received vehicle information with personal information and mobile information of a server, and displays the synchronized information. When detached from the vehicle, the mobile terminal 200 automatically converts the vehicle mode into the general mode, and records information on a driving record of the vehicle.

Hereinafter, a method of controlling the mobile terminal according to embodiments of the present invention will be explained.

Firstly, the controller 212 determines whether the mobile terminal 200 has been mounted to the vehicle. For instance, once the mobile terminal 200 is connected to an electronic controller (ECU) of the vehicle through a wired or wireless communication network, the controller 212 determines that the mobile terminal 200 has been mounted to the vehicle.

The mobile terminal 200 may further include a sensing unit (not shown) configured to sense a connected state of the mobile terminal 200 with the vehicle. For instance, the sensing unit may sense whether the mobile terminal 200 has been connected to the electronic controller (ECU) of the vehicle, or a port of the ECU of the vehicle, and may output a sensing signal to the controller 212 to thus generate a notification signal indicating that the mobile terminal 100 has been connected to the vehicle. Then, the mobile terminal 200 may display the notification signal on the display unit 151. The sensing unit (not shown), configured to sense a connected state between the mobile terminal 200 and the vehicle, may be operated automatically or manually.

Once the mobile terminal 200 is mounted to the vehicle, the controller 212 may display navigation data (map data) installed in the mobile terminal 200, on the display unit 201.

Once the mobile terminal 200 is mounted to the vehicle, the controller 212 receives pre-registered identification information on a vehicle driver (e.g., universally unique identifier, UUID) from the ECU of the vehicle.

The controller 212 authenticates the mobile terminal 200, based on the pre-registered identification information on a vehicle driver (e.g., universally unique identifier, UUID) received from the ECU of the vehicle, and identification information registered to the memory 213 (e.g., universally unique identifier, UUID). For instance, if the received pre-registered identification information on a vehicle driver matches the identification information registered to the memory 213, the controller 212 allows information exchange between the mobile terminal 200 and the ECU of the vehicle.

The controller 212 may authenticate the mobile terminal 200 based on the pre-registered identification information on a vehicle driver, the identification information registered to the memory 213, and personal information pre-registered to a server (e.g., an ID and a password registered by a user of the mobile terminal).

Once the mobile terminal 200 is authenticated, the controller 212 receives vehicle information from the ECU of the vehicle. The vehicle information may include information on conditioning equipment of the vehicle (e. g., temperature level information of a heater or an air conditioner), engine oil amount information, engine temperature information, tire pneumatic pressure information, battery information, radio channel setting information, information on a current speed of the vehicle, information on revolution per minute (RPM) of the vehicle, information on a steering angle of the vehicle, information on driving a brake of the vehicle, etc.

The controller 212 detects content corresponding to personal information among a plurality of content of the mobile terminal. The content corresponding to personal information may include a schedule application program (scheduler), a social networking service (SNS) application program (Facebook, Kakao talk, Twitter, Youtube, etc.), an email application program, a phone book application program, a moving image application program, etc. The content corresponding to personal information may further include a media application program.

The controller 212 implements a vehicle mode (vehicle screen mode), based on the content corresponding to personal information among a plurality of content of the mobile terminal, vehicle information and navigation information. Then, the controller 212 displays the vehicle mode on the display unit 201. The content corresponding to personal information may be synchronized with a server and/or a user's cellular phone.

FIG. 7 is an exemplary view illustrating a vehicle mode displayed on a mobile terminal according to embodiments of the present invention.

As shown in FIG. 7, the vehicle mode (vehicle screen mode) includes a first region 7-1 for displaying content corresponding to personal information among a plurality of content of the mobile terminal, a second region 7-2 for displaying vehicle information, and a third region 7-3 for displaying navigation information indicating a path from a current position to a destination.

The vehicle mode (vehicle screen mode) may further include a fourth region 7-4 for displaying media data (e.g., film, music video, drama, etc.), and a fifth region 7-5 for displaying an icon for a call. Once the icon for a call is selected by a user, the controller 212 performs a call.

If an email icon 7-1a is selected from the first region 7-1 for displaying content corresponding to personal information among a plurality of content of the mobile terminal, the controller 212 executes an application program corresponding to the selected email icon 7-1a, thereby displaying email content on the first region 7-1. If the email icon 7-1a is selected when the vehicle is running, the controller 212 converts email content corresponding to the selected email icon 7-1a into a voice signal, and outputs the voice signal through the voice output unit 226.

If a schedule icon 7-1b is selected from the first region 7-1 for displaying content corresponding to personal information, the controller 212 executes an application program corresponding to the selected schedule icon 7-1b, thereby displaying schedule content on the first region 7-1. If the schedule icon 7-1b is selected when the vehicle is running, the controller 212 converts schedule content corresponding to the selected schedule icon 7-1b into a voice signal, and outputs the voice signal through the voice output unit 226.

If the second region 7-2 for displaying vehicle information is selected, the controller 212 may display at least one of information on conditioning equipment of the vehicle (e. g., temperature level information of a heater or an air conditioner), engine oil amount information, engine temperature information, tire pneumatic pressure information, battery information, radio channel setting information, etc., on the second region 7-2 or an entire region of the display unit 201.

In the mobile terminal and the method of controlling the same according to the present invention, when a user mounts the mobile terminal to the vehicle, a general mode of the mobile terminal is automatically converted into a vehicle mode. This can allow the user to check the vehicle mode rapidly and easily.

In the mobile terminal and the method of controlling the same according to the present invention, when a user mounts the mobile terminal to the vehicle, a vehicle mode (vehicle screen mode) is displayed based on the content corresponding to personal information among a plurality of content of the mobile terminal, vehicle information and navigation information. This can allow the user to check a personal vehicle mode.

In the mobile terminal and the method of controlling the same according to the present invention, when a user mounts a mobile terminal to a vehicle, a vehicle mode (vehicle screen mode) is displayed based on the content corresponding to personal information among a plurality of content of the mobile terminal, vehicle information and navigation information. Further, when the vehicle is running, the content corresponding to personal information among a plurality of content of the mobile terminal in the vehicle mode is changed under restrictions on vehicle driving, and then is output. This can allow a driver of the vehicle to drive safely.

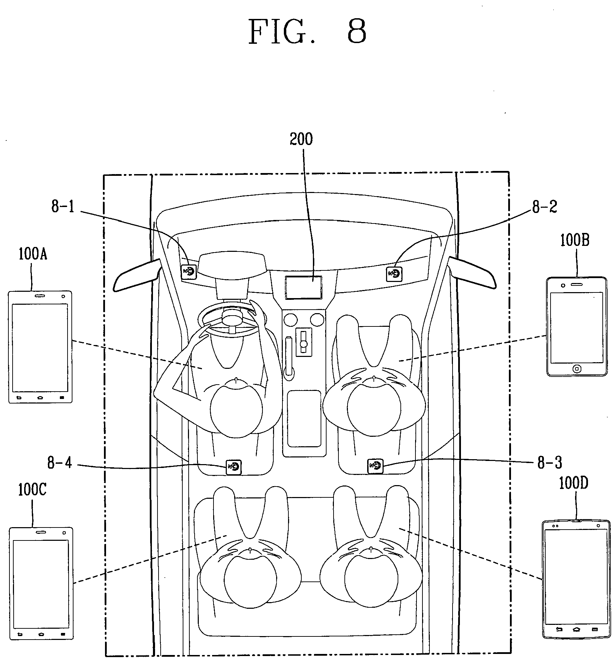

FIG. 8 is an exemplary view illustrating a plurality of terminals interworking with each other in a vehicle according to embodiments of the present invention.

As shown in FIG. 8, the plurality of terminals may include a telematics terminal (or a head unit) 200 mounted to a vehicle, and a plurality of mobile communication terminals 100A, 100B, 100C, and 100D. The plurality of terminals may be connected to each other through a wireless or wired communication network. The telematics terminal 200 may be used by a vehicle driver, and the plurality of mobile communication terminals 100 may be used by vehicle passenger(s).

Instead of the telematics terminal 200, a navigation device or the mobile communication terminal 100 may be used. Instead of the plurality of mobile communication terminals 100, a plurality of rear seat entertainment systems (RSEs), a plurality of cellular phones, a plurality of smartphones, a plurality of notebook computers, a plurality of digital broadcasting terminals, a plurality of personal digital assistants (PDAs), a plurality of portable multimedia players (PMPs), a plurality of tablet personal computers (PCs), and the like, may also be used. Hereinafter, the telematics terminal 200 and one or more mobile communication terminals 100 will be described as an example.

The telematics terminal 200 interworks with a plurality of terminals within a vehicle and easily, and rapidly receives an application program desired by a user from the plurality of terminals and execute the received application program, thereby effectively using information (for example, an application program, content, data, and the like) stored in each of the plurality of terminals.

The mobile communication terminal 100 interworks with the telematics terminal 200 within the vehicle and other mobile communication terminals within the vehicle, easily and rapidly receives an application program desired by a user from the telematics terminal 200 and the other mobile communication terminals, and executes the received application program, thereby effectively using information (for example, an application program, content, data, and the like) stored in each of the plurality of terminals.

That is, since the plurality of terminals may exchange mutual information with each other within the vehicle, only an apparatus and a method thereof will be explained. In the apparatus and the method, the telematics terminal 200 interworks with a plurality of terminals within a vehicle and an application program desired by a user is easily and rapidly received from the plurality of terminals and executed, so that the user can easily and effectively use information (for example, an application program, content, data, and the like) stored in each of the plurality of terminals.

As illustrated in FIG. 8, the information providing apparatus according to exemplary embodiments of the present invention may further include a position information generating unit configured to generate current position information of a plurality of mobile communication terminals within a vehicle. The position information generating unit may include a first near field communication (NFC) (or radio-frequency identification (RFID) tag 8-1 installed in a driver's seat of the vehicle and generating first position information indicating a position of the driver's seat of the vehicle, a second NFC tag 8-2 installed in a passenger seat of the vehicle and generating second position information indicating a position of the passenger seat of the vehicle, a third NFC tag 8-3 installed in a back seat of the passenger seat of the vehicle and generating third position information indicating a position of the back seat of the passenger seat of the vehicle, and a fourth NFC tag 8-4 installed in a back seat of the driver's seat of the vehicle and generating fourth position information indicating a position of the back seat of the driver's seat of the vehicle.

For example, when a particular mobile communication terminal approaches, the first NFC tag 8-1 transmits the first position information to the particular mobile communication terminal. The particular mobile communication terminal receives the first position information from the first NFC tag 8-1, and transmits identification information of the particular mobile communication terminal together with the received first position information to the controller 240.

When a particular mobile communication terminal approaches, the second NFC tag 8-2 transmits the second position information to the particular mobile communication terminal. The particular mobile communication terminal receives the second position information from the second NFC tag 8-2 and transmits identification information of the particular mobile communication terminal together with the received second position information to the controller 240.

When a particular mobile communication terminal approaches, the third NFC tag 8-3 transmits the third position information to the particular mobile communication terminal. The particular mobile communication terminal receives the third position information from the third NFC tag 8-3 and transmits identification information of the particular mobile communication terminal together with the received third position information to the controller 240.

When a particular mobile communication terminal approaches, the fourth NFC tag 8-4 transmits the fourth position information to the particular mobile communication terminal. The particular mobile communication terminal receives the fourth position information from the fourth NFC tag 8-4 and transmits identification information of the particular mobile communication terminal together with the received fourth position information to the controller 240.

The position information generating unit may include a first USB module installed in a driver's seat of the vehicle and providing first position information indicating a position of the driver's seat of the vehicle to the controller 240, a second USB module installed in a passenger seat of the vehicle and providing second position information indicating a position of the passenger seat of the vehicle to the controller 240, a third USB module installed in a back seat of the passenger seat of the vehicle and providing third position information indicating a position of the back seat of the passenger seat of the vehicle to the controller 240, and a fourth USB module installed in a back seat of the driver's seat of the vehicle and providing fourth position information indicating a position of the back seat of the driver's seat of the vehicle to the controller 240.

The controller 240 may detect position information of a mobile communication terminal within a vehicle on the basis of signals from a plurality of beacons installed within the vehicle. For example, the controller 240 may detect a position of a mobile communication terminal within the vehicle through a triangulation technique using the beacons.

The mobile communication terminal 100 may display an intra-vehicle position setting menu on the display unit 151 according to a user request. The intra-vehicle position setting menu may include a first item indicating a position of a driver's seat, a second item indicating a position of a passenger seat, a third item indicating a position of a back seat of the passenger seat, and a fourth item indicating a position of a back seat of the driver's seat.

When the first item is selected by a user, the mobile communication terminal 100 may generate first position information indicating the position of the driver's seat, and transmits the generated first position information to the controller 240. When the second item is selected by the user, the mobile communication terminal 100 may generate second position information indicating the position of the passenger seat, and transmits the generated second position information to the controller 240. When the third item is selected by the user, the mobile communication terminal 100 may generate third position information indicating the position of the back seat of the passenger seat, and transmits the generated third position information to the controller 240. When the fourth item is selected by the user, the mobile communication terminal 100 may generate fourth position information indicating the position of the back seat of the driver's seat, and transmits the generated fourth position information to the controller 240.

Hereinafter, a method of controlling a mobile terminal according to an embodiment of the present invention will be explained.

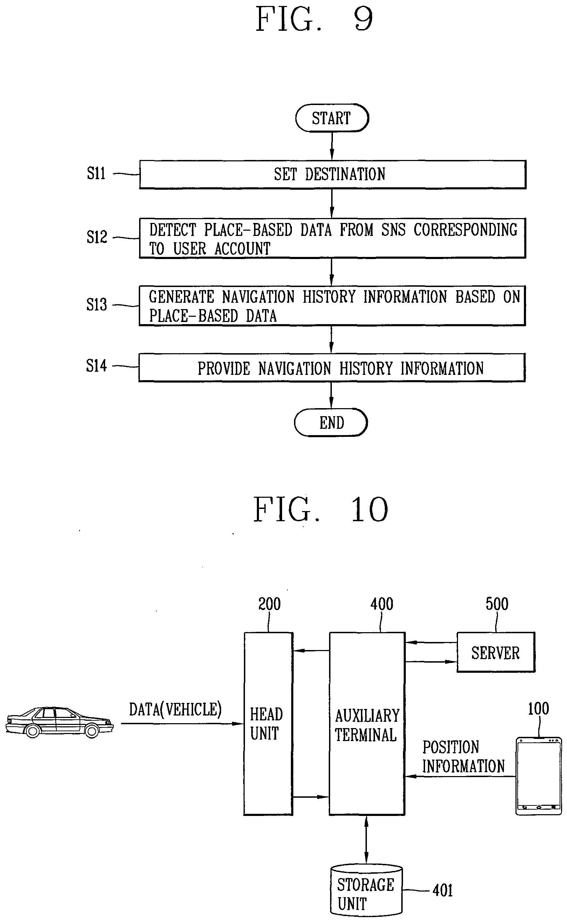

FIG. 9 is a flowchart illustrating a method of controlling a mobile terminal according to an embodiment of the present invention.

The controller 212 displays a path from a current position to a destination on map data, according to a user's request (S11).

Once a navigation history item (menu) for providing navigation history information is selected by a user, the controller 212 accesses a server (e.g., a social networking service (SNS) server, a web server, etc.), and detects place (location)-based data corresponding to a user account (e.g., Facebook, Twitter, etc.), from the server (S12). For instance, the controller 212 detects only place-based data, among information registered to an SNS server by a user (user account) (e.g., photos having position information, posts (messages) including position information, etc.). The posts (messages) including position information may include a destination name, a shop name, a place, etc., For instance, the place-based data corresponding to a user account (e.g., Facebook, Twitter, etc.) may be check-in information registered to Facebook, etc.

The controller 212 generates navigation history information based on the place-based data (S13), and displays the generated navigation history information on the display unit 201 to thus provide the navigation history information to a user. For instance, in an assumption that place (location)-based data registered to an SNS server by a user includes first to fourth position information, the controller 212 may generate the navigation history information by registering the first to fourth position information to map data.

The controller 212 may reflect, to the navigation history information, not only the position-based data, but also position information searched from a navigation application program of the telematics terminal (or head unit) 200.

The controller 212 may detect, from the server, not only place-based data corresponding to a user account (e.g., Facebook, Twitter, etc.), but also place-based data selected or recommended by a user (e. g., information checked by the user as interest information among friends' place-based information), among specific place-based data registered to the SNS server by a plurality of users related to the user account (e.g., user's friend or acquaintance, etc.).

The controller 212 may reflect, to the navigation history information, a corresponding page including the place-based data corresponding to the user account, and/or a corresponding data selected or recommended by the user among specific place-based data registered to the SNS server.

In case of generating the navigation history information by registering the first to fourth position information to map data, the controller 212 may further display registration time of the first to fourth position information, on the map data.

Thus, a user may re-set a destination efficiently and conveniently while viewing the navigation history information, and may check and manage his or her past driving path conveniently and easily by checking the navigation history information.

The navigation history information may be generated not only through the telematics terminal (or head unit) 200, but also through an auxiliary terminal connected to the telematics terminal (or head unit) 200. This will be explained with reference to FIG. 10.

FIG. 10 is a view illustrating a configuration of a mobile terminal to which an auxiliary terminal is connected according to another embodiment of the present invention.

The controller 212 displays a path from a current position to a destination on map data, according to a user's request.

Once a navigation history item (menu) for providing navigation history information is selected by a user, the controller 212 requests an auxiliary terminal 400 to detect place-based data from a social networking service (SNS) server corresponding to a user account (e.g., Facebook, Twitter, etc.).

The auxiliary terminal 400 accesses a server 500 (e.g., a social networking service (SNS) server, a web server, etc.), and detects place-based data corresponding to a user account (e.g., Facebook, Twitter, etc.), from the server 500. For instance, the auxiliary terminal 400 detects only place (location)-based data, among information registered to an SNS server by a user (e.g., photos having position information, posts (messages) including position information, etc.). The posts (messages) including position information may include a destination name, a shop name, a place, etc.,

The auxiliary terminal 400 generates navigation history information based on the place-based data, and provides the generated navigation history information to the controller 212 to thus provide the navigation history information to a user. For instance, in an assumption that place (location)-based data registered to the SNS server by a user includes first to fourth position information, the auxiliary terminal 400 may generate the navigation history information by registering the first to fourth position information to map data.

In case of generating the navigation history information by registering the first to fourth position information to map data, the auxiliary terminal 400 may further display registration time of the first to fourth position information, on the map data.

The auxiliary terminal 400 may store the navigation history information in a storage unit 401. For instance, the auxiliary terminal 400 may output the navigation history information stored in the storage unit 401, to the controller 212, according to a request from the controller 212. When a storage capacity of the telematic terminal (or head unit) 200 is deficient, the auxiliary terminal 400 may store data of the telematic terminal (or head unit) 200 in the storage unit 401.

When a computing power of the telematic terminal (or head unit) 200 is deficient, the auxiliary terminal 400 may execute a data computation of the telematic terminal (or head unit) 200.

The auxiliary terminal 400 may generate the navigation history information by registering position information registered to the mobile communication terminal 100 to map data.

The auxiliary terminal 400 may determine whether the controller 212 can set position information included in the navigation history information as a destination. For instance, the auxiliary terminal 400 may detect whether position information included in the navigation history information exists in a POI database of the telematics terminal (or head unit) 200. If the position information included in the navigation history information exists in the POI database of the telematics terminal (or head unit) 200, the auxiliary terminal 400 may determine that the controller 212 can set the position information included in the navigation history information as a destination.

On the other hand, if the position information included in the navigation history information does not exist in the POI database of the telematics terminal (or head unit) 200, the auxiliary terminal 400 may search an address or GPS coordinates of the position information included in the navigation history information, from a corresponding server (e.g., Google Place). Then, the auxiliary terminal 400 may provide the searched address or GPS coordinates to the telematics terminal (or head unit) 200.

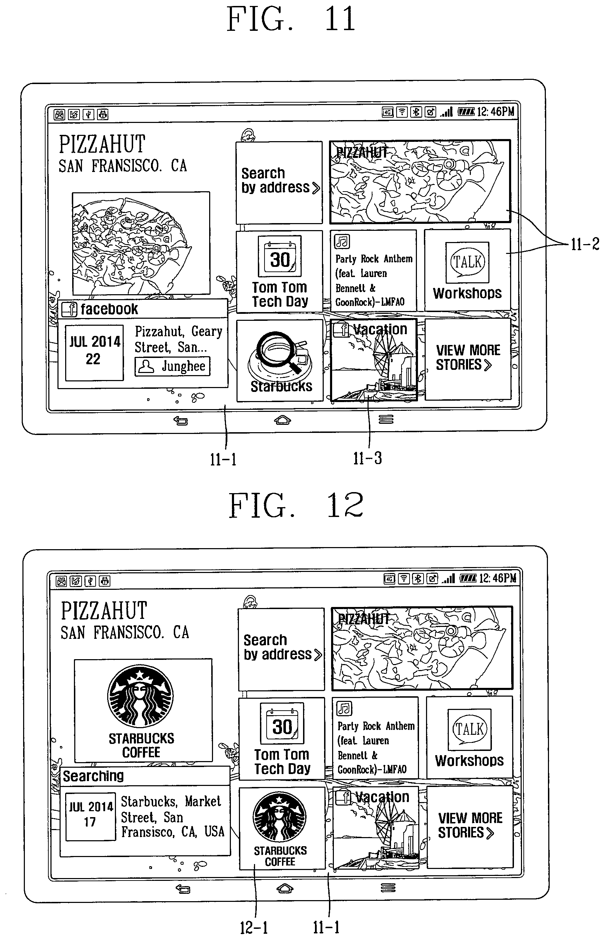

FIG. 11 is an exemplary view illustrating navigation history information according to another embodiment of the present invention.

As shown in FIG. 11, once a navigation history item (menu) for providing navigation history information 11-1 is selected by a user, the controller 212 detects place-based data (e.g, name and position information of a coffee shop, a clothes shop, a restaurant, etc.), from an SNS server corresponding to a user account (e.g., Facebook, Twitter, etc.). The place-based data may be data registered to the SNS server by a user.

The controller 212 automatically displays the detected place-based data 11-2 (e.g., name and position information of a coffee shop, a clothes shop, a restaurant, etc.) on the navigation history information (navigation history window) 11-1. That is, even if a user has ever visited a coffee shop, a clothes shop, a restaurant, etc. by friend's car not his or her own car, or by public transportation, the place-based data 11-2 is displayed on the telematics terminal (or head unit) 200 of the user's vehicle. Thus, the user may check place-based data related to the coffee shop, the clothes shop, the restaurant, etc., easily and conveniently, through the navigation history information 11-1. The controller 212 may automatically display a representative image of the detected place-based data 11-2 (e.g., name and position information of a coffee shop, a clothes shop, a restaurant, etc.), on the navigation history information 11-1. If the representative image is selected by a user, the controller 212 may display place-based data corresponding to the representative image, on a preset region of the navigation history information 11-1.

The controller 212 may automatically display place data included in vehicle's visit history information (vehicle's moving path) stored in the telematics terminal (or head unit) 200, and the detected place-based data 11-2 (e.g., name and position information of a coffee shop, a clothes shop, a restaurant, etc.), on the navigation history information 11-1. For instance, the controller 212 may mash-up place data included in vehicle's visit history information (vehicle's moving path) stored in the telematics terminal (or head unit) 200, and the detected place-based data 11-2 (e.g., name and position information of a coffee shop, a clothes shop, a restaurant, etc.). Then, the controller 212 may automatically display the mashed-up data on the navigation history information 11-1.

If a representative image of the detected place-based data 11-2 (e.g., name and position information of a coffee shop, a clothes shop, a restaurant, etc.) is selected by a user, the controller 212 may automatically set place-based data corresponding to the representative image, as a destination.

The controller 212 sorts the detected place-based data 11-2 (e.g., name and position information of a coffee shop, a clothes shop, a restaurant, etc.) into a plurality of points of interest (POIs) according to a POI category (e.g., restaurant, department store, oil station, museum, park, etc.). Then, the controller 212 displays the plurality of POIs on the navigation history information 11-1. The sorted POI information may be edited by a user.

The controller 212 may set priorities to the detected place-based data 11-2 (e.g., name and position information of a coffee shop, a clothes shop, a restaurant, etc.) (the plurality of POIs), in order of places having higher recommendation grades. Then, the controller 212 may sequentially display the detected place-based data 11-2 (e.g., name and position information of a coffee shop, a clothes shop, a restaurant, etc.) on the navigation history information 11-1 according to the priorities. The recommendation grade may be a grade (mark) provided by a user, or a grade (mark) provided by a user's friend, etc.

The controller 212 may set priorities to the detected place-based data 11-2 (e.g., name and position information of a coffee shop, a clothes shop, a restaurant, etc.) (the plurality of POIs), according to a user's preference. Then, the controller 212 may sequentially display the detected place-based data 11-2 (e.g., name and position information of a coffee shop, a clothes shop, a restaurant, etc.) on the navigation history information 11-1 according to the priorities.

If the recommendation grade is provided by a user, the controller 212 may sequentially display the detected place-based data 11-2 (e.g., name and position information of a coffee shop, a clothes shop, a restaurant, etc.) on the navigation history information 11-1, in order of registration time of the place-based data (e.g., registration time of the place-based data to an SNS server).

The controller 212 may detect a POI closest to a current position of the vehicle, among the detected place-based data 11-2 (e.g., name and position information of a coffee shop, a clothes shop, a restaurant, etc.) (the plurality of POIs), and may automatically display the detected POI on map data or the display unit, thereby recommending the detected POI to the user.

The controller 212 may detect a POI closest to a currently-set destination, among the detected place-based data 11-2 (e.g., name and position information of a coffee shop, a clothes shop, a restaurant, etc.) (the plurality of POIs), and may automatically display the detected POI on the map data or the display unit, thereby recommending the detected POI to the user as a final destination.

The controller 212 detects user news feed content from a server corresponding to a user account (e.g., Facebook server), and filters only feed content including an image source from the user news feed content, thereby generating a URL list of images corresponding to the image source.

The controller 212 performs an image-based search by using the URL list, thereby detecting words (search words) corresponding to the images. The controller 212 sorts the detected words (search words) into a plurality of POI information according to a POI category. For instance, if the detected word (search word) is 'chicken', the controller 212 may sort the 'chicken' as a food POI category. As another example, if the detected word (search word) is 'coffee shop', the controller 212 may sort the 'coffee ship' as a restaurant POI category.

The controller 212 automatically displays the plurality of POI information sorted according to a POI category on the map data or the display unit, thereby recommending the plurality of POI information to the user.

FIG. 12 is an exemplary view illustrating navigation history information according to another embodiment of the present invention.

As shown in FIG. 12, once a navigation history item (menu) for providing the navigation history information 11-1 is selected by a user, the controller 212 detects place-based data (e.g, name and position information of a coffee shop, a clothes shop, a restaurant, etc.), from an SNS server corresponding to a user account (e.g., Facebook, Twitter, etc.). Then, the controller 212 recognizes the detected place-based data as POI information, and records the recognized POI information on a POI list. The controller 212 may display a representative image 12-1 of the detected place-based data, on the navigation history information 11-1.

The controller 212 may display the POI information recorded on the POI list, on the display unit 201, according to a user's request. The controller 212 may recommend the recognized POI information to a user, as a destination.

If the detected place-based data (POI information) is data registered to the SNS sever by the user, the controller 212 may set the detected place-based data (POI information) to have a highest priority, and may display the detected place-based data (POI information) having the highest priority, on the navigation history information 11-1.

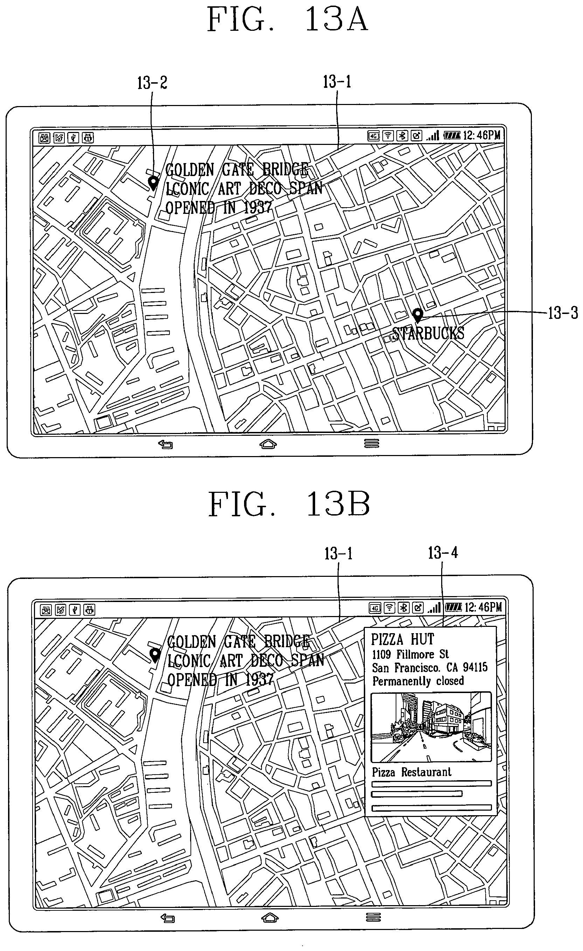

FIGS. 13A and 13B are exemplary views illustrating navigation history information according to another embodiment of the present invention.

As shown in FIG. 13, the controller 212 may generate navigation history information 13-1 by registering, to map data, destination information included in vehicle's visit history information (vehicle's moving path) stored in the telematics terminal (or head unit) 200, and the detected place-based data (e.g., name and position information of a coffee shop, a clothes shop, a restaurant, etc.). For instance, the controller 212 may display, on the map data, a representative image 13-2 (e.g., mark, sign, text, icon, etc.) indicating destination information included in vehicle's visit history information (vehicle's moving path) stored in the telematics terminal (or head unit) 200, and a representative image 13-3 (e.g., mark, sign, text, icon, etc.) indicating the detected place-based data (e.g, name and position information of a coffee shop, a clothes shop, a restaurant, etc.). The navigation history information 13-1 may be automatically generated in the unit of days and months.

If the representative image 13-3 indicating the detected place-based data (e.g, name and position information of a coffee shop, a clothes shop, a restaurant, etc.) is selected by a user, the controller 212 may detect (download) a web page 13-4 including the detected place-based data (e, g, photos and posts (messages) including the detected place-based data, memos written by friends, etc.) including the detected place-based data, from a server to which the detected place-based data has been registered. Then, the controller 212 may display the detected web page 13-4 on the representative image 13-3 indicating the detected place-based data (e.g, name and position information of a coffee shop, a clothes shop, a restaurant, etc.).

The controller 212 may extract GPS information of a photo captured by the mobile terminal 100, and may reflect (register or record) the extracted GPS information to the navigation history information 13-1.

If the representative image 13-3 indicating the detected place-based data (e.g, name and position information of a coffee shop, a clothes shop, a restaurant, etc.) is selected by a user, the controller 212 may display a search window for searching a place corresponding to the representative image 13-3, on the display unit 201.

If the representative image 13-3 indicating the detected place-based data (e.g, name and position information of a coffee shop, a clothes shop, a restaurant, etc.) is selected by a user, the controller 212 may automatically set a place corresponding to the representative image 13-3 as a destination.

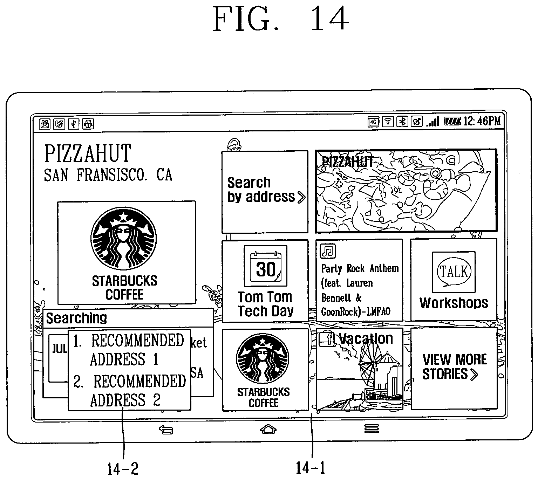

FIG. 14 is an exemplary view illustrating navigation history information according to another embodiment of the present invention.

As shown in FIG. 14, the controller 212 may detect destination information included in vehicle's visit history information (vehicle's moving path) stored in the telematics terminal (or head unit) 200, and/or the place-based data (e.g., name and position information of a coffee shop, a clothes shop, a restaurant, etc.). Further, the controller 212 may detect place information (e.g., information on a meeting place) from schedule information stored in a server, the memory 213, and the mobile communication terminal 100. Then, the controller 212 may generate navigation history information 14-1, based on the destination information included in the vehicle's visit history information (vehicle's moving path), and/or the place-based data (e.g., name and position information of a coffee shop, a clothes shop, a restaurant, etc.), and the place information.

If the place information (e.g., information on a meeting place) does not include address information, the controller 212 may access a corresponding server to search for address information corresponding to the place information (e.g., information on a meeting place), from the corresponding server. Then, the controller 212 may display the searched address information (recommended address 1 and recommended address 2), on the navigation history information 14-1. A user may select a desired address from the displayed address information (recommended address 1 and recommended address 2).

As aforementioned, in the mobile terminal and the method of controlling the same according to the present invention, since navigation history information is generated based on place-based data detected from a server corresponding to a user account, places which a user has ever visited can be checked and managed easily and conveniently.

As the present features may be embodied in several forms without departing from the characteristics thereof, it should also be understood that the above-described embodiments are not limited by any of the details of the foregoing description, unless otherwise specified, but rather should be construed within its scope as defined in the appended claims.

## Claims

1. A system comprising a mobile terminal, (200), a server (500) and a further server, wherein the mobile terminal comprises:
a communication unit (206);
a display unit (201) configured to display map data; and
a controller (212) configured to:
access the server (500) through the communication unit,
detect place-based data (11-2) including a plurality of point of interest, POI, information from user news feed content corresponding to a user account from the server by:
filtering feed content including an image source from the user news feed content,
generating a URL list of images corresponding to the image source,
performing an image-based search by using the URL list,
detecting words corresponding to the images based on the image-based search,
sorting the detected words into the plurality of POI information according to a POI category;
generate navigation history information (11-1) by registering the detected place-based data to the map data, wherein it is detected whether position information included in the navigation history information exists in a POI database of the mobile terminal and wherein, if the position information included in the navigation history information does not exist in the POI database, the mobile terminal searches in the further server for an address, or a global positioning system, GPS, coordinate value, of the position information included in the navigation history information, and the address or GPS coordinate value is then provided to the controller of the mobile terminal, and
display the navigation history information with the plurality of POI information sorted according to the POI category on the display unit.

2. The system of claim 1, wherein the server (500) is a social networking service server (500) or a web server (500).

3. The system of claim 1, wherein the controller (212) records the place-based data and position information searched from a navigation application program, to the navigation history information.

4. The system of claim 1, wherein the controller (212) records, to the navigation history information, place data included in vehicle's visit history information stored in the mobile terminal, and the detected place-based data.

5. The system of claim 1, further comprising an auxiliary terminal which is connected to the mobile terminal, and which is configured to determine whether the controller (212) is able to set the position information included in the navigation history information as a destination.

6. The system of claim 1, wherein the controller (212) sets priorities to the plurality of points of interest, in order of places having higher recommendation grades, and displays the plurality of points of interest on the navigation history information according to the priorities,
and/or wherein the controller (212) displays the plurality of points of interest on the navigation history information, in order of registration time of the place-based data to the server (500),
and/or wherein the controller (212) detects a point of interest closest to a current position of the mobile terminal, among the plurality of points of interest, and automatically displays the detected point of interest on the map data,
and/or wherein the controller (212) detects a point of interest closest to a currently-set destination, among the plurality of points of interest, and recommends the detected point of interest as a final destination.

7. The system of one of claims 1 to 6 further comprising a vehicle to which the mobile terminal is mounted.

8. A method of controlling a mobile terminal, comprising:
displaying map data on a display unit (201);
accessing a server (500) through a communication unit (206), and detecting place-based data including a plurality of point of interest, POI, information from user news feed content corresponding to a user account from the server by:
filtering feed content including an image source from the user news feed content,
generating a URL list of images corresponding to the image source,
performing an image-based search by using the URL list,
detecting words corresponding to the images based on the image-based search,
sorting the detected words into the plurality of POI information according to a POI category;
generating navigation history information by registering the detected place-based data to the map data, wherein it is detected whether position information included in the navigation history information exists in a POI database of the mobile terminal and wherein, if the position information included in the navigation history information does not exist in the POI database, the mobile terminal searches in a further server for an address, or a global positioning system, GPS, coordinate value, of the position information included in the navigation history information, and the address or GPS coordinate value is then provided to a controller (212) of the mobile terminal; and
displaying the navigation history information with the plurality of POI information sorted according to the POI category on the display unit.

9. The method of claim 8, wherein the server (500) is a social networking service server (500) or a web server (500).

10. The method of claim 8, further comprising recording position information searched from the place-based data and a navigation application program, to the navigation history information.

11. The method of claim 8, further comprising recording, to the navigation history information, place data included in vehicle's visit history information stored in the mobile terminal, and the detected place-based data.

12. The method of claim 8, further comprising setting priorities to the plurality of points of interest, in order of places having higher recommendation grades, and displaying the plurality of points of interest on the navigation history information according to the priorities,
and/or further comprising providing priorities to the plurality of points of interest according to a user's preference, and displaying the plurality of points of interest on the navigation history information according to the priorities,
and/or further comprising displaying the plurality of points of interest on the navigation history information, in order of registration time of the place-based data to the server (500),
and/or further comprising detecting a point of interest closest to a current position of the mobile terminal, among the plurality of points of interest, and automatically displaying the detected point of interest on the map data.

## Patentansprüche

1. System, das ein mobiles Endgerät (200), einen Server (500) und einen weiteren Server umfasst,
wobei das mobile Endgerät aufweist:
eine Kommunikationseinheit (206);
eine Anzeigeeinheit (201), die dazu eingerichtet ist, Kartendaten anzuzeigen;
und
eine Steuerung (212), die eingerichtet ist zum:
Zugreifen auf den Server (500) über die Kommunikationseinheit,
Erkennen standortbasierter Daten (11-2), die eine Mehrzahl von Informationen über interessierende Punkte, POI, aus einem Benutzerkonto entsprechenden Benutzernewsfeedinhalten von dem Server enthalten, durch:
Filtern von Feedinhalten, die eine Bildquelle enthalten, aus den Benutzernewsfeedinhalten,
Generieren einer URL-Liste von Bildern, die der Bildquelle entsprechen, Durchführen einer bildbasierten Suche unter Verwendung der URL-Liste, Erkennen von den Bildern entsprechenden Wörtern auf Grundlage der bildbasierten Suche,
Sortieren der erkannten Wörter in die Mehrzahl von POI-Informationen in Übereinstimmung mit einer POI-Kategorie;
Generieren von Navigationsverlaufsinformation (11-1) durch Registrieren der erkannten standortbasierten Daten auf den Kartendaten, wobei erkannt wird, ob eine Positionsinformation, die in der Navigationsverlaufsinformation enthalten ist, in einer POI-Datenbank des mobilen Endgeräts existiert, und wobei, falls die in der Navigationsverlaufsinformation enthaltene Positionsinformation nicht in der POI-Datenbank existiert, das mobile Endgerät im weiteren Server nach einer Adresse oder einem Koordinatenwert des globalen Positionierungssystems, GPS, der in der Navigationsverlaufsinformation enthaltenen Positionsinformation sucht, und dann die Adresse oder der GPS-Koordinatenwert der Steuerung des mobilen Endgeräts bereitgestellt wird, und
Anzeigen der Navigationsverlaufsinformation mit der Mehrzahl der POI-Informationen, die in Übereinstimmung mit der POI-Kategorie sortiert wurden, auf der Anzeigeeinheit.

2. System nach Anspruch 1, wobei der Server (500) ein Server eines sozialen Netzwerkdiensts (500) oder ein Webserver (500) ist.

3. System nach Anspruch 1, wobei die Steuerung (212) die standortbasierten Daten und die von einem Navigationsanwendungsprogramm gesuchte Positionsinformation in der Navigationsverlaufsinformation aufzeichnet.

4. System nach Anspruch 1, wobei die Steuerung (212) Standortdaten, die in einer im mobilen Endgerät gespeicherte Besuchsverlaufsinformation eines Fahrzeugs enthalten sind, und die erkannten standortbasierten Daten in der Navigationsverlaufsinformation aufzeichnet.

5. System nach Anspruch 1, ferner umfassend ein Hilfsendgerät, das mit dem mobilen Endgerät verbunden ist und das dazu eingerichtet ist zu ermitteln, ob die Steuerung (212) fähig ist, die in der Navigationsverlaufsinformation enthaltene Positionsinformation als ein Ziel festzulegen.

6. System nach Anspruch 1, wobei die Steuerung (212) Prioritäten für die Mehrzahl der interessierenden Punkte festlegt, in einer Reihenfolge der Standorte mit höheren Empfehlungsgraden, und die Mehrzahl der interessierenden Punkte in Übereinstimmung mit den Prioritäten in der Navigationsverlaufsinformation anzeigt,
und/oder wobei die Steuerung (212) die Mehrzahl der interessierenden Punkte in einer Reihenfolge einer Registrierungszeit der standortbasierten Daten am Server (500) in der Navigationsverlaufsinformation anzeigt,
und/oder wobei die Steuerung (212) einen interessierenden Punkt, der einer aktuellen Position des mobilen Endgeräts am nächsten ist, unter der Mehrzahl der interessierenden Punkte erkennt und den erkannten interessierenden Punkt automatisch in den Kartendaten anzeigt,
und/oder wobei die Steuerung (212) einen interessierenden Punkt, der einem aktuell festgelegten Ziel am nächsten ist, unter der Mehrzahl der interessierenden Punkte erkennt und den erkannten interessierenden Punkt automatisch als ein endgültiges Ziel empfiehlt.

7. System nach einem der Ansprüche 1 bis 6, das ferner ein Fahrzeug umfasst, an dem das mobile Endgerät montiert ist.

8. Verfahren zum Steuern eines mobilen Endgeräts, umfassend:
Anzeigen von Kartendaten auf einer Anzeigeeinheit (201);
Zugreifen auf einen Server (500) über eine Kommunikationseinheit (206) und Erkennen standortbasierter Daten, die eine Mehrzahl von Informationen über interessierende Punkte, POI, aus einem Benutzerkonto entsprechenden Benutzernewsfeedinhalten von dem Server enthalten, durch:
Filtern von Feedinhalten, die eine Bildquelle enthalten, aus den Benutzernewsfeedinhalten,
Generieren einer URL-Liste von Bildern, die der Bildquelle entsprechen, Durchführen einer bildbasierten Suche unter Verwendung der URL-Liste, Erkennen von den Bildern entsprechenden Wörtern auf Grundlage der bildbasierten Suche,
Sortieren der erkannten Wörter in die Mehrzahl von POI-Informationen in Übereinstimmung mit einer POI-Kategorie;
Generieren einer Navigationsverlaufsinformation durch Registrieren der erkannten standortbasierten Daten auf den Kartendaten, wobei erkannt wird, ob eine Positionsinformation, die in der Navigationsverlaufsinformation enthalten ist, in einer POI-Datenbank des mobilen Endgeräts existiert, und wobei, falls die in der Navigationsverlaufsinformation enthaltene Positionsinformation nicht in der POI-Datenbank existiert, das mobile Endgerät in einem weiteren Server nach einer Adresse oder einem Koordinatenwert des globalen Positionierungssystems, GPS, der in der Navigationsverlaufsinformation enthaltenen Positionsinformation sucht, und die Adresse oder der GPS-Koordinatenwert dann einer Steuerung (212) des mobilen Endgeräts bereitgestellt wird; und
Anzeigen der Navigationsverlaufsinformation mit der Mehrzahl der POI-Informationen, die in Übereinstimmung mit der POI-Kategorie sortiert wurden, auf der Anzeigeeinheit.

9. Verfahren nach Anspruch 8, wobei der Server (500) ein Server eines sozialen Netzwerkdiensts (500) oder ein Webserver (500) ist.

10. Verfahren nach Anspruch 8, ferner umfassend ein Aufzeichnen einer in den standortbasierten Daten und von einem Navigationsanwendungsprogramm gesuchten Positionsinformation in der Navigationsverlaufsinformation.

11. Verfahren nach Anspruch 8, ferner umfassend ein Aufzeichnen von Standortdaten, die in einer im mobilen Endgerät gespeicherten Besuchsverlaufsinformation eines Fahrzeugs enthalten sind, und der erkannten standortbasierten Daten in der Navigationsverlaufsinformation.

12. Verfahren nach Anspruch 8, ferner umfassend ein Festlegen von Prioritäten für die Mehrzahl der interessierenden Punkte, in einer Reihenfolge der Standorte mit höheren Empfehlungsgraden, und Anzeigen der Mehrzahl der interessierenden Punkte in Übereinstimmung mit den Prioritäten in der Navigationsverlaufsinformation,
und/oder ferner umfassend ein Bereitstellen von Prioritäten für die Mehrzahl der interessierenden Punkte in Übereinstimmung mit einer Präferenz eines Benutzers und Anzeigen der Mehrzahl der interessierenden Punkte in Übereinstimmung mit den Prioritäten in der Navigationsverlaufsinformation,
und/oder ferner umfassend ein Anzeigen der Mehrzahl der interessierenden Punkte in einer Reihenfolge einer Registrierungszeit der standortbasierten Daten am Server (500) in der Navigationsverlaufsinformation,
und/oder ferner umfassend ein Erkennen eines interessierenden Punkts, der einer aktuellen Position des mobilen Endgeräts am nächsten ist, unter der Mehrzahl der interessierenden Punkte und automatisches Anzeigen des erkannten interessierenden Punkts in den Kartendaten.

## Revendications

1. Système comprenant un terminal mobile (200), un serveur (500) et un autre serveur,
le terminal mobile comprenant :
une unité de communication (206) ;
une unité d'affichage (201) conçue pour afficher des données de carte ; et
un organe de commande (212) conçu pour :
accéder au serveur (500) par l'intermédiaire de l'unité de communication, pour détecter des données d'emplacement (11-2)
comprenant une pluralité d'informations de point d'intérêt, POI, à partir de contenu de flux de nouvelles d'utilisateur correspondant à un compte utilisateur à partir du serveur par :
filtrage de contenu de flux comprenant une source d'image provenant du contenu de flux de nouvelles d'utilisateur,
générer une liste URL d'images correspondant à la source d'image,
effectuer une recherche sur la base d'image au moyen de la liste URL,
détecter des mots correspondant aux images sur la base de la recherche basée sur l'image,
classer les mots détectés en la pluralité d'informations de POI selon la catégorie de POI ;
pour générer des informations d'historique de navigation (11-1) par enregistrement des données d'emplacement détectées dans les données de carte, il est détecté que si les informations de position comprises dans les informations d'historique de navigation existent dans une base de données POI du terminal mobile, et que si les informations de position comprises dans les informations d'historique de navigation n'existent pas dans la base de données de POI, le terminal mobile recherche dans l'autre serveur une adresse, ou dans un système de localisation GPS, la valeur de coordonnée, des informations de position comprises dans les informations d'historique de navigation, et l'adresse ou la valeur de coordonnée GPS est alors fournie à l'organe de commande du terminal mobile, et
pour afficher les informations d'historique de navigation avec la pluralité d'informations de POI classées selon la catégorie de POI sur l'unité d'affichage.

2. Système selon la revendication 1, le serveur (500) étant un serveur de service de réseautage social (500) ou un serveur Web (500).

3. Système selon la revendication 1, l'organe de commande (212) enregistrant les données d'emplacement et les informations de position recherchées à partir d'un programme d'application de navigation, dans les informations d'historique de navigation.

4. Système selon la revendication 1, l'organe de commande (212) enregistrant, dans les informations d'historique de navigation des données d'emplacement comprises dans les informations d'historique des visites de véhicule mémorisées dans le terminal mobile, et les données d'emplacement détectées.

5. Système selon la revendication 1, comprenant en outre un terminal auxiliaire qui est connecté au terminal mobile, et qui est conçu pour déterminer si l'organe de commande (212) peut définir les informations de position comprises dans les informations d'historique de navigation en tant que destination.

6. Système selon la revendication 1, l'organe de commande (212) définissant des priorités pour la pluralité de points d'intérêt, par ordre d'emplacements ayant des niveaux de recommandation élevée, et affichant la pluralité de points d'intérêt sur les informations d'historique de navigation selon les priorités,
et/ou l'organe de commande (212) affichant la pluralité de points d'intérêt sur les informations d'historique de navigation, par ordre d'heure d'enregistrement des données d'emplacement dans le serveur (500),
et/ou l'organe de commande (212) détectant un point d'intérêt le plus proche d'une position actuelle du terminal mobile, parmi la pluralité de points d'intérêt et affichant automatiquement le point d'intérêt détecté sur les données de carte,
et/ou l'organe de commande (212) détectant un point d'intérêt le plus proche à une destination définie actuellement, parmi la pluralité de points d'intérêt, et recommandant le point d'intérêt détecté en tant que destination finale.

7. Système selon l'une quelconque des revendications 1 à 6, comprenant en outre un véhicule dans lequel est monté le terminal mobile.

8. Procédé de commande d'un terminal mobile, consistant à :
afficher des données de carte sur une unité d'affichage (201) ;
accéder au serveur (500) par une unité de communication (206), et à détecter les données d'emplacement comprenant une pluralité d'informations de points d'intérêt, POI provenant de contenu de flux de nouvelles d'utilisateur correspondant à un compte utilisateur provenant du serveur :
par filtrage de contenu de flux comprenant une source d'image provenant du contenu de flux de nouvelles d'utilisateur,
par génération d'une liste URL d'images correspondant à la source d'image,
par réalisation d'une recherche basée sur l'image à l'aide de la liste URL,
par détection de mots correspondant aux images sur la base de la recherche basée sur l'image,
par classement des mots détectés en la pluralité d'informations de POI selon une catégorie de POI ;
générer des informations d'historique de navigation par enregistrement des données d'emplacement détectées dans les données de carte, il est détecté que si les informations de position comprises dans les informations d'historique de navigation existent dans une base de données POI du terminal mobile, et que si les informations de position comprises dans les informations d'historique de navigation n'existent pas dans la base de données de POI, le terminal mobile recherche dans l'autre serveur une adresse, ou dans un système de localisation GPS, la valeur de coordonnée, des informations de position comprises dans les informations d'historique de navigation, et l'adresse ou la valeur de coordonnée GPS est alors fournie à l'organe de commande (212) du terminal mobile, et
afficher les informations d'historique de navigation avec la pluralité d'informations de POI classées selon la catégorie de POI sur l'unité d'affichage.

9. Procédé selon la revendication 8, le serveur (500) étant un serveur de service de réseautage social (500) ou un serveur web (500).

10. Procédé selon la revendication 8, consistant en outre à enregistrer des informations de position recherchées à partir des données d'emplacement et d'un programme d'application de navigation dans les informations d'historique de navigation.

11. Procédé selon la revendication 8, consistant en outre à enregistrer, dans les informations d'historique de navigation, les données d'emplacement comprises dans les informations d'historique des visites de véhicule mémorisées dans le terminal mobile, et dans les données basées sur remplacement détectées.

12. Procédé selon la revendication 8, consistant en outre à définir des priorités pour la pluralité de points d'intérêts par ordre d'emplacements ayant des niveaux de recommandation élevés, et afficher la pluralité de points d'intérêts sur les informations d'historique de navigation selon les priorités,
et/ou consistant en outre à fournir des priorités à la pluralité de points d'intérêt selon une préférence de l'utilisateur et afficher la pluralité des points d'intérêt sur les informations d'historique de navigation selon les priorités,
et/ou consistant en outre à afficher la pluralité de points d'intérêt sur les informations d'historique de navigation, par ordre d'heure d'enregistrement des données d'emplacement dans le serveur (500),
et/ou consistant en outre à détecter un point d'intérêt le plus proche d'une position actuelle du terminal mobile, parmi la pluralité de points d'intérêt, et à afficher automatiquement le point d'intérêt détecté sur les données de carte.
